# EUROPEAN PATENT SPECIFICATION

(11) **EP 0 725 943 B1**
(45) Date of publication and mention of the grant of the patent: **14.05.2003**
(21) Application number: 95926478.9
(22) Date of filing: 14.08.1995
(51) Int. Cl.: G02F 1/1335

(54) **LIQUID CRYSTAL DISPLAY DEVICE AND RETARDATION FOIL**
FLUESSIGKRISTALL-ANZEIGEVORRICHTUNG UND VERZOEGERUNGSFOLIE
DISPOSITIF D'AFFICHAGE A CRISTAUX LIQUIDES ET FEUILLE RETARDATRICE

(30) Priority: 23.08.1994 EP 94202402
(43) Date of publication of application: 14.08.1996
(73) Proprietor: Koninklijke Philips Electronics N.V., 5621 BA Eindhoven (NL)
(72) Inventor: VAN HAAREN, Johannes, Albertus, Matthijs, Maria, NL-5621 BA Eindhoven (NL); BROER, Dirk, Jan, NL-5621 BA Eindhoven (NL)
(74) Representative: Raap, Adriaan Yde
(86) International application number: IB9500644
(87) International publication number: WO96006380

(56) References cited:
- EP-A- 0 352 724
- EP-A- 0 576 342
- EP-A- 0 576 931
- GB-A- 2 272 779
- US-A- 5 241 408

## Description

The invention relates to a retardation foil according to the introductory part of claim1.

The invention also relates to a liquid crystal display device provided with such a retardation foil.

Display devices of this type are generally used in, for example monitors, TV applications and, for example display devices in automobiles and for instruments.

A display device of the type described in the opening paragraph is known from EP0.576.342 A1. In this display device a compensation foil consisting of an optically anisotropic layer of polymer material with helical ordering is used to compensate birefringence and obtain a high contrast in a twisted nematic display device. The polymer material is ordered in such a way that a molecular helix can be distinguished, with the axis of the helix at an angle to the layer.

However, display devices provided with such compensation foils in practice will soon become too thick. The retardation layer according to the invention is therefore characterized in that the optically anisotropic layer preferably has a sawtooth structure on at least one of its boundary surfaces. In a device using a plurality of pixels, the pitch of the sawtooth structure is preferably of the order of the pixel size, or smaller.

If the two boundary surfaces are formed with a sawtooth structure, the sawtooth directions, i.e. the directions in which the separate teeth increase in thickness, can be rotated, for example 90° with respect to each other. Such a structure has a smaller retardation (difference in optical path length for the ordinary and extraordinary light beam, also expressed as d.Δn, with d: thickness of the material, Δn: optical anisotropy).

The optically anisotropic layer may alternatively consist of sub-layers; for example, the layer may comprise a uniaxial foil as a sub-layer. The optically anisotropic layer may also comprise a layer of polymerized discotic liquid crystal material.

These and other aspects of the invention will be apparent from and elucidated with reference to the embodiments described hereinafter.

In the drawings:
Fig. 1 is a diagrammatic cross-section of a part of a liquid crystal display device according to the invention,
Fig. 2 shows a part of the device of Fig. 1,
Fig. 3 shows diagrammatically the optical behaviour of the device of Fig. 2, with indicatrices,
Fig. 4 shows diagrammatically a number of variants of the device of Fig. 1,
Fig. 5 shows the structure formula of a liquid crystal composition as used in an optically anisotropic layer with a cholesteric ordering,
Fig. 6 shows the possible external influence of the director pattern in such an optically anisotropic layer during its manufacture, while
Fig. 7 shows a possible distribution in the director pattern after such an external influence, and
Fig. 8 shows diagrammatically how the angle dependence is reduced by means of the optically anisotropic layer at different voltages in the transmission/voltage characteristic.

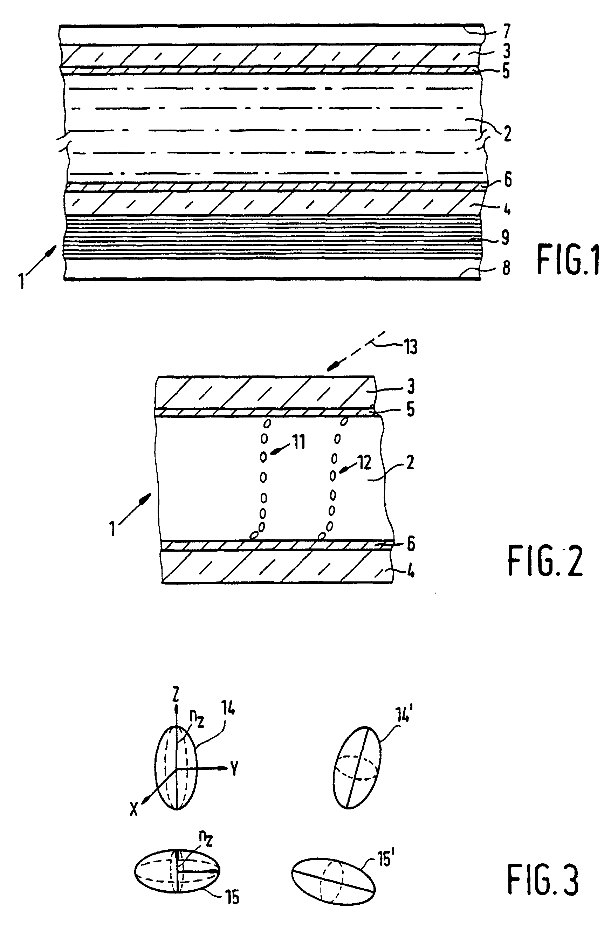

Fig. 1 is a diagrammatic cross-section of a part of a liquid crystal display device comprising a liquid crystal cell 1 with a twisted nematic liquid crystal material 2 being present between two substrates 3, 4 of, for example glass, provided with electrodes 5, 6. The device further comprises two polarizers 7, 8 whose direction of polarization is mutually crossed perpendicularly. The device further comprises orientation layers (not shown) which orient the liquid crystal material on the inner walls of the substrates, in this example in the direction of the axes of polarization of the polarizers, such that the cell has a twist angle of 90 degrees. In this case, the liquid crystal material has a positive optical anisotropy and a positive dielectric anisotropy. If the electrodes 5, 6 are energized with an electric voltage, the molecules, and hence the directors, orient themselves to the field. In the ideal case, all molecules are thus substantially perpendicular to the two substrates (situation 11 in Fig. 2). However, in practice this situation requires a too high voltage; at customary voltages, the molecules extend at a smaller angle to the normal on the substrates 3, 4, corresponding to situation 12 in Fig. 2. From the direction 13 the viewing angle is rather in the direction of the molecules so that said angle dependence still occurs for light which is still transmitted at this voltage. This angle dependence may be explained by means of the "optical indicatrix", a three-dimensional geometric representation of the refractive index for each direction in which the vector of the electric field component of the light can oscillate. For optically isotropic material it is convex, for biaxial material it is an ellipsoid and for uniaxial material it is an ellipsoid having an axial symmetry. Since in the ideal case the liquid crystal material in the driven state is uniaxial substantially throughout its thickness (in substantially all molecule layers, except for some molecule layers near the substrates, the molecules are perpendicular to the substrates) the situation 11 of Fig. 2 can be represented by means of the indicatrix 14 in Fig. 3 with an ellipsoid shape and the principal axis transverse to the liquid crystal layer, the refractive index n_{z} perpendicular to the substrates being larger than that in the planes parallel to the substrates (nₓ = n_{y}).

Since the liquid is not isotropic, there is birefringence. It can be shown that this birefringence can be compensated with an indicatrix 15 in Fig. 3 having an ellipsoid shape and an axis transverse to the liquid crystal layer, the refractive index n, perpendicular to the substrates being smaller than that in the planes parallel to the substrates (nₓ = n_{y}). The compensation layers as described in EP-A 0,372,973 may be manufactured in such a way that the associated indicatrix satisfies this. Such a compensation layer comprises a cholesteric material with the molecular axis of the helix being transverse to the layer, so that the director pattern, viewed transversely to the layer, is rotationally symmetrical.

For the more practical situation 12 in Fig. 2, the indicatrix 14' has a principal axis which extends at a small angle to the axis transverse to the liquid crystal layer; it is, as it were, slightly tilted. A compensation layer 9 between the liquid crystal material and the polarizer 8, with indicatrix 15 which is optimal for the situation 11 will have very little effect in this case.

The invention provides optically anisotropic compensation layers 9 having such an indicatrix 15' that the birefringence is substantially entirely compensated for the more practical adjustment of, for example situation 12; as it were, the indicatrix 15' is tilted in the same way with respect to the principal axis as the indicatrix 14'. Viewed in a direction perpendicular to the substrates, the director pattern in the optically anisotropic layer thus acquires a non-rotationally symmetrical pattern.

The director pattern in the optically anisotropic layer may be rotationally symmetrical itself, for example if a cholesteric foil having an optically anisotropic layer as described in EP-A 0.423.881 is used. Alternatively, discotic (disc-shaped) liquid crystal materials may be used as basic materials for the anisotropic compensation layer 9. These discotic molecules may be provided with reactive groups so as to polymerize the materials. By means of polymerization, and dependent on, for example temperature or other peripheral conditions, the desired ordering may then be provided. Here again, a layer is obtained with a refractive index n₂ transverse to the anisotropic compensation layer and being smaller than that in the planes parallel to the anisotropic compensation layer (nₓ = n_{y}).

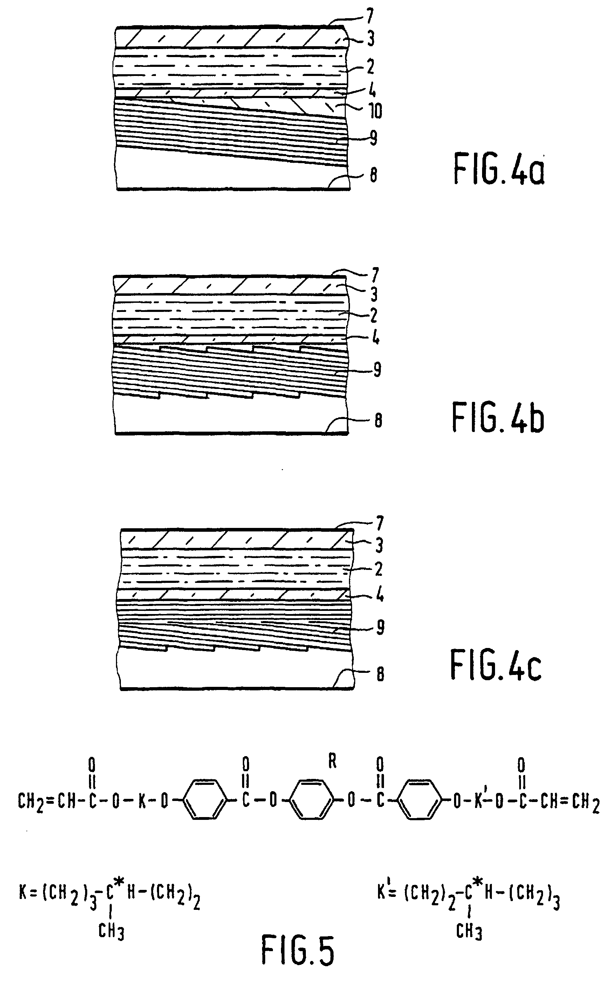

By slightly tilting this foil 9 (Fig. 4a), a broken director pattern, viewed transversely to the substrates, is obtained. To avoid reflections, the interspace may be filled up with a material 10 having the same refractive index as the substrate material or as the foil material, for example UV-polymerized ethoxylated bisphenol-A diacrylate.

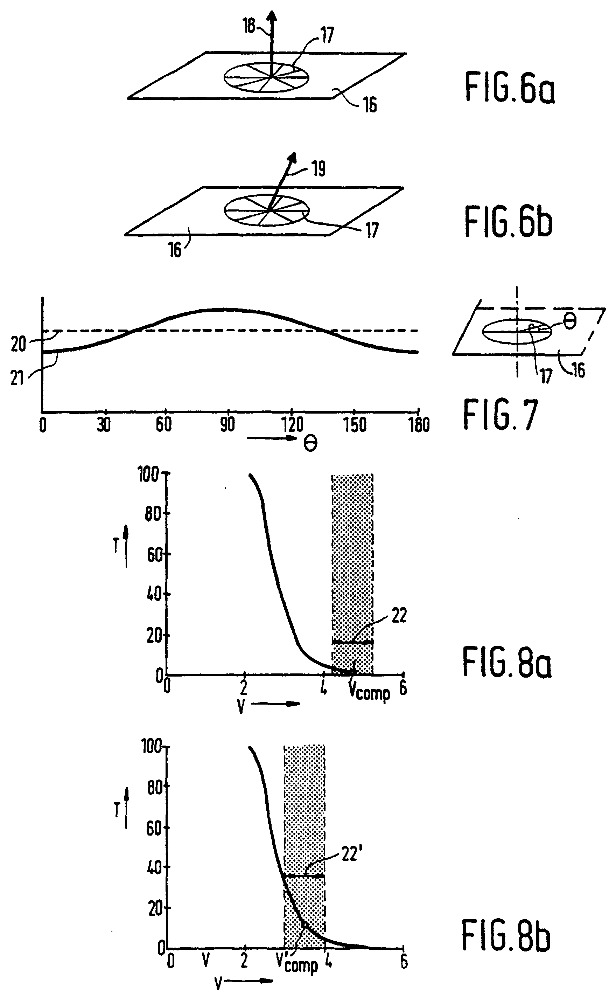

At larger dimensions, such a construction will become very thick. For the procedure of manufacturing the cholesteric filters, *viz*. providing a liquid chiral crystal monomer as a thin film on substrates, as is shown in Fig. 5 and subsequent (photo)polymerization, there are a number of variations yielding favourable results, as shown in Fig. 6. For example, the manufacturing procedure may be based on sawtooth-shaped substrates, which results in a foil 9 as is shown in Fig. 4b. The resultant optically anisotropic layer now has a sawtooth structure at both sides, the long sides of the sawtooth extending at a small angle to the substrates 3, 4. If no special measures are taken during manufacture, the directors of the molecules of the cholesteric liquid crystal material from which the foil 9 is made direct themselves parallel to these long sides, which is shown by means of the shaded structure in the optically anisotropic layer (foil) 9 in Figs. 1 and 4. The optical axis of the foil 9 now no longer coincides with the optical axis of the liquid crystal cell formed by the liquid crystal material 2 and the substrates 3 (because the director profile in at least a part of the optically anisotropic layer is provided at an angle to the boundary surfaces, the boundary surface being considered as a surface bounding the foil transverse to the foil, while surface disturbances such as the teeth of the sawtooth in this example are ignored) and consequently extends at an angle to a direction transverse to the substrates and at an angle to the substrates. The director profile in the foil thus has a broken symmetry, viewed transversely to the substrate 3, 4. To avoid optical disturbance by the sawtooth pattern, the pitch of the sawtooth is chosen to be smaller than the dimension of a pixel of the display device. The sawtooth patterns at both sides of the foil may be rotated with respect to each other, for example through 90 degrees. The total structure then has a smaller retardation.

The sawtooth structure may alternatively be provided on one boundary surface only, so that a splay deformation is introduced in the foil 9 (Fig. 4c). The directors then have an angle to a plane parallel to the substrates over a part of the thickness of the foil, so that a broken axial symmetry is obtained again. The same can be achieved by making use of flat substrates during manufacture and by inducing a pretilt on one or both surfaces when the liquid cholesteric material is being provided; upon subsequent freezing (netting) of the structure, this structure is maintained so that again a number of directors has an angle to a plane parallel to the substrates and a broken axial symmetry is obtained.

The anisotropic layers based on discotic liquid crystal materials may also be given such a structure, The directors of the discotic molecules now extend at an angle to the normal and, viewed transversely to the substrates 3, 4, the foil again has a broken symmetry.

The sawtooth structure may again be provided on one boundary surface only so that a bend deformation is introduced in the foil 9. The directors are not directed transversely to the substrates over a part of the thickness of the foil, so that a broken axial symmetry is obtained again.

During photopolymerization, there may be an electric field, denoted by the arrow 18 in Fig. 6a, perpendicular to the surfaces 16 in this example, in which the directors 17 are situated (when manufacturing cholesteric layers). Under the influence of this field (which is provided, for example on electrodes parallel to the layer to be formed, in which possibly one of the electrodes may be provided on the substrate of the liquid crystal cell), the molecules are tilted. To tilt all molecules in the same direction (uniform tilt), a substrate is preferably used which induces a pretilt in the same way as described hereinbefore. If tilting is induced by means of a magnetic field, it can be oriented obliquely to the surfaces 16, as is denoted by arrow 19 in Fig. 6b.

Without special measures, the director is situated along a helix transverse to the compensation layer which has a small pitch with respect to the thickness of the compensation layer. Such a compensator has axial symmetry, *i.e.* all directions of the director occur to a substantially equal extent: there is no preference for a given azimuth angle ϑ. This is shown by means of a broken line in Fig. 7. This axial symmetry can be broken by exposing the cholesteric layer during polymerization to a magnetic field transverse to the layer, so that a preference for given azimuth angles is introduced, which is shown by means of the line 21 in Fig. 7.

The extent of asymmetry may be increased by adding a uniaxial foil having a small Δn to the foil 9; this may be, for example the substrate on which the monomer layer is provided (for example (stretched) cellulose triacetate or (stretched) polycarbonate). Alternatively, the layer may be slightly stretched after the polymerization has been partly finished, while the birefringence of the stretched substrate on which the monomer layer is provided may also contribute to the breaking of the symmetry.

The last-mentioned measures (influencing with an electric or magnetic field, providing a uniaxial foil having a small birefringence, stretching of the layer) may also be used for disturbing the axial symmetry in the foil in layers based on discotic materials.

The extent of "refraction" of the symmetry is also determined by the voltage range in which birefringence must be compensated so as to obtain complete extinction. For example, a range 22 in the transmission/voltage curve may be chosen around a given voltage V_{comp} (Fig. 8a) in which the position of the directors in the liquid crystal material hardly deviates from that shown in the situation 11 of Fig. 2. In this case, a slightly broken symmetry is sufficient. When a range 22' in the transmission/voltage curve is chosen around a given voltage V'_{comp} (Fig. 8b) in which the position of the directors in the liquid crystal material deviates considerably from that in the situation 11 of Fig. 2, a much stronger broken symmetry must be used. Optimum extinction can be obtained by rotating the compensation layer with respect to the liquid crystal layer, if necessary. Alternatively, the anisotropic layer 9 may be provided with areas having a more or less broken symmetry. In the first areas the viewing angle dependence is then slightly overcompensated, while it is compensated slightly too little in the other areas. The dimension of the areas is smaller than that of a pixel. In this way, a symmetrical viewing angle dependence is obtained. The invention is of course not limited to the examples shown. For example, a plurality of foils (anisotropic layers) 9 may be arranged one behind the other and, for example each of them may compensate optimally for a different given voltage V_{comp}. Alternatively, for example two foils may be provided on different sides of the liquid crystal layer.

In summary, the invention provides a liquid crystal display cell with one or more compensation layer(s) and viewed transversely to the cell, a broken (non-rotationally symmetrical) refractive index pattern or indicatrix. To obtain a small angle dependence, the associated birefringence of the compensation layer is complementary to that associated with a given voltage across the liquid crystal cell. The compensation layer may be manufactured in many different ways by making use of cholesteric or discotic foils for this layer.

## Claims

1. A retardation foil comprising an optically anisotropic layer of a polymer material, the optical axis of the optically anisotropic layer extending at an angle to a direction transverse to the optically anisotropic layer, **characterized in that** the optically anisotropic layer has a sawtooth structure on at least one of its boundary surfaces.

2. A retardation foil as claimed in claim 1, **characterized in that** both boundary surfaces of the optical anisotropic layer have a sawtooth structure whose directions are rotated with respect to each other.

3. A retardation foil as claimed in claim 1 or 2, **characterized in that** the optically anisotropic layer also comprises a layer having a uniaxial symmetry.

4. A retardation foil as claimed in claim 1, **characterized in that** the optically anisotropic layer comprises a layer of a polymer material having a cholesteric ordening.

5. A retardation foil as claimed in claim 1, **characterized in that** the optically anisotropic layer comprises a layer of polymerized discotic liquid crystal material.

6. A liquid crystal display device having a display cell which comprises a layer of nematic liquid crystal material between two substrates provided with electrodes, said cell being further provided with polarizers and comprising at least a retardation foil according to claims 1-5.

## Patentansprüche

1. Verzögerungsfolie mit einer optisch anisotropen Schicht aus einem Polymermaterial, wobei die optische Achse der optisch anisotropen Schicht sich in einem Winkel in einer Richtung quer zu der optisch anisotropen Schicht erstreckt, **dadurch gekennzeichnet, dass** die optisch anisotrope Schicht eine Sägezahnstruktur auf wenigstens einer der Begrenzungsflächen hat.

2. Verzögerungsfolie nach Anspruch 1, **dadurch gekennzeichnet, dass** die beiden Begrenzungsflächen der optisch anisotropen Schicht eine Sägezahnstruktur haben, deren Richtungen gegenüber einander gedreht sind.

3. Verzögerungsfolie nach Anspruch 1 oder 2, **dadurch gekennzeichnet, dass** die optisch anisotrope Schicht ebenfalls eine Schicht mit einer uniaxialen Symmetrie aufweist.

4. Verzögerungsfolie nach Anspruch 1, **dadurch gekennzeichnet, dass** die optisch anisotrope Schicht eine Schicht aus einem Polymermaterial mit einer cholesterischen Ordnung aufweist.

5. Verzögerungsfolie nach Anspruch 1, **dadurch gekennzeichnet, dass** die optisch anisotrope Schicht eine Schicht aus einem polymerisierten diskotischen Flüssigkristallmaterial aufweist.

6. Flüssigkristall-Wiedergabeanordnung mit einer Wiedergabezelle, die eine Schicht aus nematischem Flüssigkristallmaterial zwischen zwei mit Elektroden versehenen Substraten enthält, wobei die genannte Zelle weiterhin mit Polarisatoren versehen ist und wenigstens eine Verzögerungsfolie nach den Ansprüchen 1 bis 5 aufweist.

## Revendications

1. Feuille retardatrice comprenant une couche optiquement anisotrope constituée d'un matériau polymère, l'axe optique de la couche optiquement anisotrope s'étendant sous un angle vers une direction étant transversale à la couche optiquement anisotrope, **caractérisée en ce que** la couche optiquement anisotrope présente une structure en dents de scie sur au moins une de ses surfaces limites.

2. Feuille retardatrice selon la revendication 1, **caractérisée en ce que** les deux surfaces limites de la couche optiquement anisotrope présentent une structure en dents de scie dont les directions sont tournées l'une par rapport à l'autre.

3. Feuille retardatrice selon la revendication 1 ou 2, **caractérisée en ce que** la couche optiquement anisotrope comprend également une couche ayant une symétrie uniaxiale.

4. Feuille retardatrice selon la revendication 1, **caractérisée en ce que** la couche optiquement anisotrope comprend une couche constituée d'un matériau polymère ayant un ordre cholestérique.

5. Feuille retardatrice selon la revendication 1, **caractérisée en ce que** la couche optiquement anisotrope comprend une couche constituée de matériau à cristaux liquides discotique polymérisé.

6. Dispositif d'affichage à cristaux liquides ayant une cellule d'affichage qui comprend une couche constituée de matériau à cristaux liquides nématique entre deux substrats qui sont pourvus d'électrodes, ladite cellule étant encore pourvue de polariseurs et comprenant au moins une feuille retardatrice selon les revendications précédentes 1 à 5.
